# EUROPÄISCHE PATENTSCHRIFT

(11) **EP 3 773 978 B1**
(45) Veröffentlichungstag und Bekanntmachung des Hinweises auf die Patenterteilung: **09.02.2022**
(21) Anmeldenummer: 18825895.8
(22) Anmeldetag: 07.12.2018
(51) Int. Cl.: B01D 33/23, D21D 5/04

(54) **FILTERSEKTOR EINES SCHEIBENFILTERS**
FILTER SECTOR OF A DISC FILTER
SECTEUR FILTRANT D'UN FILTRE À DISQUES

(30) Priorität: 13.04.2018 DE 102018108799
(43) Veröffentlichungstag der Anmeldung: 17.02.2021
(73) Patentinhaber: Voith Patent GmbH, 89522 Heidenheim (DE)
(72) Erfinder: GOMMEL, Axel, 88214 Ravensburg (DE); NUSSBAUMER, Markus, 88212 Ravensburg (DE)
(74) Vertreter: Voith Patent GmbH - Patentabteilung
(86) Internationale Anmeldenummer: PCT/EP2018/083961
(87) Internationale Veröffentlichungsnummer: WO 2019/197049

(56) Entgegenhaltungen:
- EP-A2- 0 544 636
- DE-A1-102015 211 338
- US-A- 5 227 065
- US-A- 6 010 014
- US-A- 6 113 783

## Beschreibung

Die Erfindung betrifft einen Filtersektor einer um eine Hohlwelle rotierenden Filterscheibe eines Scheibenfilters zur Abtrennung von Flüssigkeiten aus einer Suspension, insbesondere einer Faserstoffsuspension, bestehend aus einer ersten und einer gegenüberliegenden zweiten, perforierten, profilierten und den Innenraum des Filtersektors begrenzenden Filterplatte, die von zwei gemeinsamen, in Umfangsrichtung voneinander beabstandeten und radial verlaufenden Plattenhaltern gehalten werden, die ausgehend von einem, mit der Hohlwelle verbundenen Fußteil die radial verlaufenden Ränder der Filterplatten umschließen.

Derartige Scheibenfilter werden zur Eindickung der Suspension und in der Papierindustrie insbesondere zur Faserstoffrückgewinnung eingesetzt und beispielsweise in der EP 2678087 A1 sowie der DE 20 2011 110 505 U1 beschrieben. Weitere Scheibenfilter sind in der EP 0544636 A1 und der US 5,227,065 offenbart.

Hierzu ist die Hohlwelle in der Regel mit einer Unterdruckquelle verbunden. Auf den Filterscheiben bildet sich infolge des Druckunterschieds zwischen der Faserstoffsuspension und dem Innenraum der Filterscheiben eine Vliesschicht. Beim Eintauchen der Filterscheiben in die Faserstoffsuspension gelangt so weitestgehend nur Wasser in den Innenraum der Filterscheiben und damit die Hohlwelle.

Die Vliesschicht wird beim Auftauchen meist über Schaber entfernt und zum entsprechenden Stoffauslauf geführt oder mit Wasser in den Stoffauslauf gespritzt. Die Filterscheiben bestehen zur Minimierung des Herstellungs- und Montageaufwandes aus mehreren Filtersektoren, die auf der Hohlwelle befestigt sind. Insbesondere bei hohen Stoffdichten unterliegen die Filterscheiben einer großen Belastung.

Die Aufgabe der Erfindung ist es daher die Effizienz des Scheibenfilters mit möglichst geringem Aufwand zu verbessern.

Erfindungsgemäß wurde die Aufgabe gelöst durch die Merkmale von Anspruch 1.

Hierdurch wird eine momentenfreie, formschlüssige Fixierung der Filterplatten in den Plattenhaltern möglich. Ein Zusammenpressen der Filterplatten an den Rändern und/oder das Miteinander-Verbinden der Filterplatten zwischen den beiden Plattenhaltern können somit entfallen.

Eine einfache Konstruktion ergibt sich hierbei, wenn die Plattenhalter einteilig ausgebildet sind.

Allerdings kann sich insbesondere die Montage der Filtersektoren dadurch vereinfachen, dass die Plattenhalter jeweils aus mehreren Elementen zusammengesetzt sind.

Für eine zusätzliche Fixierung der Filterplatten weisen die Plattenhalter

Hinterschneidungen für das Profil der Filterplatten auf.

Mit Vorteil sollte dem radial äußeren, zwischen den Plattenhaltern verlaufendem Rand der Filterplatten als Abschluss des Innenraums des Filtersektors eine Abschlussleiste zugeordnet werden, welche auch mit den Plattenhaltern verbunden werden kann.

Um den Innenraum des Filtersektors im Bereich der Plattenhalter abschließen zu können, sollten die Plattenhalter in einem radial verlaufenden Dichtungsabschnitt dem Profil der Filterplatten folgen. Mit Vorteil beträgt dabei der Abstand zwischen den Plattenhaltern und den Filterplatten im Dichtungsabschnitt insgesamt maximal 1 mm, vorzugsweise maximal 0,5 mm.

Trotz des kleinen Spaltes im Dichtungsabschnitt ergibt sich während des Betriebs dennoch eine Abdichtung des Innenraums, da dieser Spalt schnell und sicher von Fasern der Faserstoffsuspension abgedeckt wird.

Darüber hinaus erlaubt der Spalt eine geringe Relativverschiebung zwischen den Filterplatten und somit eine momentfreie Fixierung derselben in den Plattenhaltern. Bei Bedarf einer verstärkten Lagefixierung oder Abdichtung kann es aber dennoch vorteilhaft sein, wenn die Plattenhalter jeweils ein oder mehrere die Filterplatten zusammendrückende Spannelemente besitzen.

Falls die Plattenhalter außerdem jeweils einen mit dem Innenraum des Filtersektors verbundenen und zum Fußteil führenden Kanal aufweisen, so kann diesem über die profilierten Ränder der Filterplatten zusätzlich Filtrat zugeführt und von dort zum Fußteil weitergeleitet werden, was den hydraulischen Querschnitt vergrößert und die Filtratabfuhr verbessert.

Die Filtratzufuhr vom Innenraum des Filtersektos zu diesem Kanal wird dabei erleichtert oder sogar erst ermöglicht, wenn wenigstens eine Filterplatte im Dichtungsabschnitt zumindest eines Plattenhalters profiliert ausgebildet ist.

Zur Maximierung der aktiven Filterfläche sollte die Plattenhalter möglichst schmal sein und die Perforierung der Filterplatten zumindest bis an die Plattenhalter reichen.

Zwecks Schaffung einer großen und formstabilen Filterfläche sollten des Weiteren wenigstens eine, vorzugsweise beide Filterplatten ein Wellenprofil aufweisen.

Im Interesse einer hohen Stabilität des Filtersektors ist es vorteilhaft, wenn die Wellen des Wellenprofils zweier gegenüberliegender Filterplatten des Filtersektors zueinander geneigt verlaufen.

Jedoch gestaltet sich die Bildung von Strömungskanälen im Innenraum des Filtersektors zur Unterdruckquelle hin einfacher, wenn die Wellen des Wellenprofils zweier gegenüberliegender Filterplatten des Filtersektors parallel zueinander verlaufen.

Wenn die Berge des Wellenprofils wenigstens einer Filterplatte in zumindest einem Abschnitt eines Plattenhalters parallel zu diesem verlaufen, kann so sichergestellt werden, dass diese Filterplatte nicht aus diesem Abschnitt des Plattenhalters herausrutschen kann.

Außerdem sollten beim Wellenprofil die Täler breiter als die Berge sein.

Die Breite der Täler und Berge wird dabei über die Mittellinie bestimmt, welche durch die Mitte der Strecke zwischen Bergkamm und Talsohle des Wellenprofils verläuft.

Die schmaleren Wellenberge führen bei gleicher Höhe des Wellenbergs zu steileren Flanken und ermöglichen eine Erhöhung der Anzahl von Wellenbergen, was eine Steigerung der Entwässerungsoberfläche und damit auch der Entwässerungsleistung ermöglicht.

Die relativ breiten Täler erleichtern das Ablösen der Vliesschicht aus denselben. Unterstützt wird dies auch noch dadurch, dass das Wachstum der Vliesschicht senkrecht zur Plattenoberfläche erfolgt und sich so in den breiteren Tälern mehr Gewicht an Vliesschicht ansammelt.

Um die Entwässerungsoberfläche zu vergrößern, ist es vorteilhaft, wenn die Täler des Wellenprofils vom Innenraum wegweisende Erhebungen besitzen. Damit dies nicht das Ablöseverhalten der Vliesschicht beeinträchtigt, sollten diese Erhebungen unterhalb der Bergkämme des Wellenprofils enden.

Wegen ihrer Auswirkung auf die zur Verfügung stehende Entwässerungsfläche genügt es, wenn sich die Erhebungen ausschließlich im perforierten Bereich der Filterplatte befinden.

Mit Vorteil sind die Erhebungen wellenförmig ausgebildet, wobei die Wellenberge der Erhebungen vorzugsweise parallel zu den Bergen des Wellenprofils der Filterplatte verlaufen.

Hinsichtlich der Wirkung auf die Entwässerungsleistung einerseits und die Ablösbarkeit der Vliesschicht andererseits ist es von Vorteil, wenn zwischen zwei Bergen des Wellenprofils höchstens zwei, vorzugsweise nur eine wellenförmige Erhebung vorhanden ist. Zur umfassenden Nutzung dieser Vorteile sollten sich die wellenförmigen Erhebungen auch über das gesamte Wellenprofils der Filterplatte erstrecken.

Falls die Wellenkämme des Wellenprofils der Filterplatte nicht linear verlaufen, so kann damit die Filteroberfläche noch weiter vergrößert werden.

Auf der anderen Seite erleichtert ein linearer Verlauf der Wellenkämme die Bildung von Strömungskanälen im Innenraum des Filtersektors in Richtung Unterdruckquelle.

Darüber hinaus lässt sich die Funktionssicherheit des Filtersektors verbessern, indem die Abschlussleiste zumindest eine, vorzugsweise von einem grobmaschigen Siebgewebe oder einem perforierten Siebblech gebildete Öffnung zum jeweiligen Innenraum des Filtersektors besitzt.

Nach dem Auftauchen aus der Suspension und dem Freiräumen dieser Öffnung mittels einer Reinigungsvorrichtung gelangt Luft in den Innenraum des entsprechenden Filtersektors, d.h. der Unterdruck im Innenraum bricht zusammen. Infolgedessen kann das Wasser im Innenraum des Filtersektors wesentlich schneller über die Hohlwelle abfließen, was die Menge des in die Suspension zurückfließenden Wasser erheblich reduziert.

Ermöglicht wird dies dadurch, dass die Profilierung der Filterplatten bis in die Abschlussleiste und/oder den Plattenhalter mit der entsprechenden Öffnung reicht. Auch die Vliesschicht lässt sich mittels der in Rotationsrichtung folgenden Ablösevorrichtung leichter vom entsprechenden Filtersektor lösen.

Konstruktiv einfach lassen sich diese Öffnungen dabei an der radialen Außenkante, d.h. der Abschlussleiste der Filterscheiben anordnen.

Des Weiteren sollten sich die Wellen der Filterplatten im Fußteil zur Hohlwelle hin über einen Bereich von mindestens 20 mm fortsetzen.

Das relativ weite Hineinreichen der Filterplatten in das Fußteil erleichtert die Schaffung einer dichten Verbindung zwischen dem, von den beiden Filterplatten gebildeten Innenraum über das Fußteil mit der Hohlwelle.

Neben einer sehr stabilen Befestigung der Filterplatte am Fußteil erhöht dies auch die Stabilität der Filterplatten selbst.

Die Filterplatten lassen sich mittels Zugdruckumformen eines Blechs, auch Tiefziehen genannt, problemlos und kostengünstig herstellen.

Für die Anwendung in Scheibenfiltern bilden mehrere Filtersektoren die kreisförmige Filterscheibe.

Nachfolgend soll die Erfindung an zwei Ausführungsbeispielen näher erläutert werden.

In der beigefügten Zeichnung zeigt:
Figur 1: einen schematischen Querschnitt durch einen Scheibenfilter;
Figur 2: eine Teildraufsicht auf den Scheibenfilter ;
Figur 3: eine Seitenansicht zweier Filtersektoren 1;
Figur 4: eine Schnittdarstellung eines Randabschnitts eines Filtersektors 1;
Figur 5: einen vergrößerten Ausschnitt von Figur 4 und
Figur 6: einen mehrteiligen Plattenhalter 8.

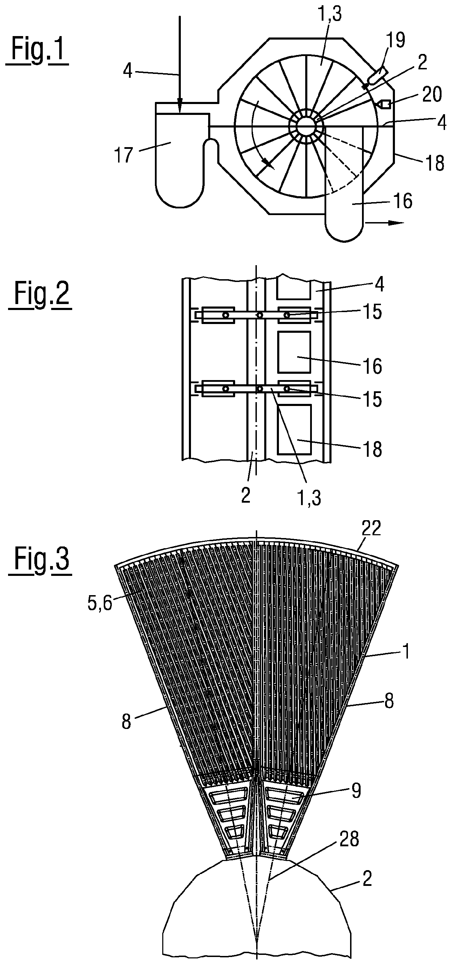

Die Faserstoffsuspension 4 wird gemäß Figur 1 über einen Einlauf 17 in den Behälter 18 des Scheibenfilters geleitet. Im Behälter 18 befindet sich eine horizontal verlaufende und rotierbar gelagerte Hohlwelle 2 mit mehreren senkrechten und axial voneinander beabstandeten Filterscheiben 3.

Die Filterscheiben 3 werden, wie in Figur 3 zu erkennen, jeweils von mehreren kreisringsektorförmigen Filterelementen 1 gebildet, die über je einen Fußteil 9 mit der Hohlwelle 2 verbunden sind.

Zur Senkung des Herstellungsaufwandes besteht die Hohlwelle 2 aus mehreren, sich in axialer Richtung erstreckenden und in Umfangsrichtung nebeneinander angeordneten Modulen.

Die Filterelemente 1 besitzen einen Innenraum 7, der über eine separate Öffnung der Hohlwelle 2 mit einem Kanal in derselben zur Fluidführung in Verbindung steht. Der Innenraum 7 der Filterelemente 1 wird von zwei perforierten und axial voneinander beabstandeten Filterplatten 5,6 begrenzt.

Um das Wasser aus der Suspension 4 abziehen zu können, steht die mit einer Unterdruckquelle verbundene Hohlwelle 2 mit dem Innenraum 7 der Filterelemente 1 in Verbindung.

Die sich dabei an der Außenseite der Filterelemente 1, konkret am perforierten Bereich der Filterplatten 5,6 bildende Vliesschicht wird nach dem Auftauchen aus der Suspension 4 in den Stoffauslauf 16 befördert.

Hierzu befinden sich die Stoffausläufe 16 gemäß Figur 2 jeweils zwischen zwei benachbarten Filterscheiben 3. Die Entfernung der Vliesschicht vom entsprechenden Filtersektor 1 erfolgt mittels einer, jeder Filterscheibe 3 zugeordneten Ablösevorrichtung 19, welche einen oder mehrere Wasserstrahlen auf die entsprechende Filterplatte 5,6 richtet.

Die von der, von der Perforation zurückgehaltenen Fasern gebildete Vliesschicht ist auf der Filterplatte 5,6 unterschiedlich stark ausgebildet. Im Wesentlichen hängt das Dickenprofil der Vliesschicht von der Oberflächenform der Filterplatte 5,6 ab.

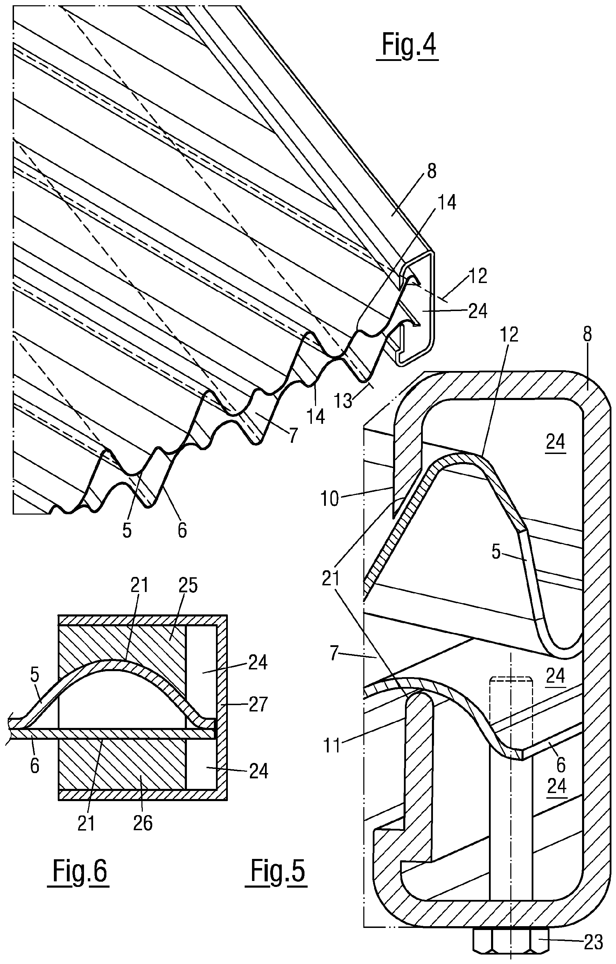

Zur Gewährleistung einer effizienten Entwässerung wird bei den Filterplatten 5,6 eine möglichst umfassend perforierte und dennoch stabile Oberfläche angestrebt, was bei den in Figur 4 und 5 dargestellten Ausführungen durch ein Wellenprofil der Filterplatten 5,6 erreicht wird.

Hinzu kommt, dass beim perforierten Wellenprofil die Täler breiter, insbesondere, wie angedeutet, um 100 bis 300% breiter als die Berge 12,13 sind. Dadurch gelingt eine Vergleichmäßigung bei Dicke der Vliesschicht, was deren Ablösung von der Filterplatte 5,6 ohne die Gefahr eines Abreißens erleichtert.

Über die steileren Flanken der Berge 12,13 können so auch mehr Wellen pro Entwässerungsfläche der Filterplatte 5,6 untergebracht werden.

Die Breite der Berge 12,13 und Täler wird auf der Mittellinie gemessen, welche jeweils durch die Mitte der Strecke zwischen einem Bergkamm und einer benachbarten Talsohle verläuft.

Zwecks Vergrößerung der wirksamen Filteroberfläche weisen die Filterplatten 5,6, wie in den Figuren 4 und 5 zu erkennen, auf der vom Innenraum 7 wegweisenden Außenseite im perforierten Bereich der Täler des Wellenprofils jeweils eine wellenförmige Erhebung 14 auf, wobei die Wellenberge der Erhebungen 14 hier parallel zu den Bergen 12,13 des Wellenprofils der jeweiligen Filterplatte 5,6 verlaufen.

Zur umfassenden Nutzung ihrer Vorteile verlaufen die wellenförmigen Erhebungen 14 über das gesamte Wellenprofils der Filterplatte 5,6.

Die Erhebungen 14 erstrecken sich ausgehend von der Talsohle im Interesse einer guten und sicheren Ablösbarkeit der Vliesschicht nur über 20 und 70% der Strecke zwischen dem Bergkamm und der benachbarten Talsohle des Wellenprofils.

Bezüglich der Stabilität des Filtersektors 1 und dessen Transportkapazität ist es bei den meisten Anwendungen zur Entwässerung von Faserstoffsuspensionen 4 optimal, wenn der Höhenunterschied zwischen den Bergen 12,13 und Tälern einer Filterplatte 5,6 zwischen 5 und 10 mm liegt.

Da die Filterplatten 5,6 in der Regel von einem, vorzugsweise tiefgezogenen Blech gebildet werden, bilden die Erhebungen 14 gleichzeitig auch eine Erweiterung des Innenraums 7.

Dabei ist es besonders vorteilhaft, die Filterplatten 5,6 mit dem Fußteil 9 einstückig auszuführen.

Alternativ kann aber eine sehr stabile und dichte Verbindung zwischen den gewellten Filterplatten 5,6 und dem entsprechenden Fußteil 9 realisiert werden, wenn sich die Wellen der Filterplatten 5,6 im Fußteil 9 zur Hohlwelle 2 hin über einen Bereich zwischen 20 und maximal 100 mm fortsetzen. Dabei umschließt das Fußteil 9 die Wellen der Filterplatten 5,6 möglichst umfassend.

Die Wellen des Wellenprofils verlaufen linear und bezüglich der gegenüberliegenden Filterplatten 5,6, wie in Figur 4 gestrichelt angedeutet, zueinander geneigt.

Die Berge 12,13 und Täler des Wellenprofils der Filterplatten 5,6 sind dabei zwischen 0 und 45° zur Radialen 28 der Filterscheibe 3 geneigt.

Zur Stabilisierung aber auch zur Abdichtung des Innenraums 7 des Filtersektors 1 sind beide Filterplatten 5,6 des jeweiligen Filtersektors 1 gemeinsam an einem Filterrahmen befestigt, der ausgehend von dem, mit der Hohlwelle 2 verbundenen Fußteil 9 die Ränder der Filterplatten 5,6 abdichtend gemeinsam umschließt.

Dieser Filterrahmen wird von zwei gemeinsamen, in Umfangsrichtung voneinander beabstandeten und entlang der Radialen 28 der Hohlwelle 2 verlaufenden Plattenhaltern 8 gebildet, die ausgehend von dem mit der Hohlwelle 2 verbundenen Fußteil 9 die radial verlaufenden Ränder der Filterplatten 5,6 umschließen. Dem radial äußeren, zwischen den Plattenhaltern 8 verlaufenden Rand der Filterplatten 5,6 ist als Teil des Filterrahmens eine Abschlussleiste 22 zugeordnet, die den Innenraum 7 radial nach außen abschließt.

Zwecks Bildung einer großen Filterfläche reicht die Perforierung der Filterplatten 5,6 zumindest bis an den Filterrahmen, der außerdem möglichst schmal ist.

Die Plattenhalter 8 selbst werden von einem einteiligen, zu den Filterplatten 5,6 hin offenen C-förmigen Hohlprofil gebildet, wobei die Profilierung der Filterplatten 5,6 in das Hohlprofil hineinreicht und die Kontur der gegenüberliegenden Enden 10,11 des Hohlprofils entsprechend des Profils der mit dem jeweiligen Ende 10,11 in Kontakt stehenden oder geringfügig davon beabstandeten Filterplatte 5,6 ausgebildet ist.

Der Abschnitt zwischen diesen Enden 10,11 und der gegenüberliegenden Filterplatte 5,6 bildet den radial verlaufenden Dichtungsabschnitt 21 des Plattenhalters 8, der den Innenraum 7 zur Umgebung abdichtet. Ein kleiner Spalt von maximal 1 mm ist dabei für die Dichtwirkung unkritisch, da die Fasern diesen schnell überdecken.

Bei dem in Figur 4 und 5 gezeigten Beispiel verlaufen die Berge 13 des Wellenprofils der unteren Filterplatte 6 in einem radial verlaufenden Abschnitt des Plattenhalters 8 parallel zu dem entsprechenden geraden, unteren Ende 11 des Hohlprofils des Plattenhalters 8.

Das gegenüberliegende obere Ende 10 des Hohlprofils folgt dabei der Wellenkontur der oberen Filterplatte 5.

Wegen der im Innern des Hohlprofils des Plattenhalters 8 hinter dem jeweiligen Ende 10,11 liegenden Hinterschneidung können die Filterplatten 5,6 nicht aus dem Hohlprofil herausrutschen. Über ein geringes Spiel zwischen den Enden 10,11 des Hohlprofils und den jeweiligen Filterplatten 5,6 ist eine Relativverschiebung zwischen den Filterplatten 5,6 möglich, was Spannungen abbaut.

Ist eine Verminderung dieses Spiels gewünscht, so können die Filterplatten 5,6 gemäß Figur 5 über Spannelemente 23 des Plattenhalters 8 beispielsweise in Form von Spannschrauben zusammengedrückt werden.

Auch ein Verbinden der Filterplatten 5,6 im Bereich zwischen den Plattenhaltern 8 und im Randbereich entfällt.

Zusätzlich kann ein Kanal 24 im Hohlprofil des Plattenhalters 8 zur Ableitung des Filtrats aus dem Innenraum 7 in das Fußteil 9 genutzt werden. Die Verbindung zwischen Innenraum 7 und Hohlprofil ist über die in das Hohlprofil des Plattenhalters 8 hinreichende Profilierung der Filterplatten 5,6 und gegebenenfalls auch deren Perforierung gewährleistet.

Wie in Figur 2 angedeutet, weist die Abschlussleiste 22 des Filterrahmens im radial äußeren Randbereich der Filterscheibe 3, d.h. am Außenumfang der Filterscheibe 3 eine oder mehrere Öffnungen 15 zum jeweiligen Innenraum 7 des Filtersektors 1 auf, die von einem grobmaschigen Siebgewebe oder einem perforierten Siebblech gebildet werden. Auch hier kann die Verbindung zum Innenraum 7 durch die Hineinführung der Profilierung in ein Hohlprofil der Abschlussleiste 22 und das Fehlen einer ansonsten üblichen flächigen Verbindung zwischen den Filterplatten 5,6 ermöglicht werden.

Über diese perforierten Öffnungen 15 erfolgt nach dem Auftauchen des Filtersektors 1 die Belüftung seines Innenraums 7.

Hierzu müssen die perforierten Öffnungen 15 allerdings unmittelbar nach dem Auftauchen aus der Suspension 4 und vor dem Ablösen der Vliesschicht mit Hilfe einer Reinigungsvorrichtung 20 gereinigt werden. Die Reinigungsvorrichtung 20 richtet dabei einen Wasserstrahl von außen auf die perforierte Öffnung 15.

Die über die perforierte Öffnung 15 in den Innenraum 7 strömende Luft führt zum Zusammenbruch des Unterdrucks im Innenraum 7 und unterstützt so die Abführung des Wassers aus dem Innenraum 7 über die Hohlwelle 2.

Außerdem erleichtert dies auch das Abschälen der Vliesschicht von der Filterplatte 5,6.

Figur 6 zeigt im Unterschied zu den bisherigen Ausführungen einen Querschnitt durch einen Plattenhalter 8, der aus mehreren Elementen zusammengesetzt ist.

Auch hier reicht die Profilierung der Filterplatten 5,6 in die Plattenhalter 8 hinein.

Die äußere Begrenzung des Plattenhalters 8 wird von einem U-Profil 27 gebildet, welches den radial verlaufenden Rand der Filterplatten 5,6 umschließt. Der radial verlaufende Dichtungsabschnitt 21 wird zwischen den Filterplatten 5,6 und einem jeweils diesen zugeordneten Formteil 25,26 des Plattenhalters 8 gebildet.

Im Dichtungsabschnitt 21 folgen die Formteile 25,26 dem Profil der jeweiligen Filterplatte 5,6, wobei ein geringfügiger Spalt für die Dichtwirkung unkritisch ist.

Bei der Montage wird das U-Profil 27 über die Formteile 25,26 geschoben, wobei gleichzeitig im Inneren ein Kanal 24 gebildet wird, der das Filtrat aus dem Innenraum 7 des Filtersektors 1 zum Fußteil 9 führt.

## Patentansprüche

1. Filtersektor (1) einer um eine Hohlwelle (2) rotierenden Filterscheibe (3) eines Scheibenfilters zur Abtrennung von Flüssigkeiten aus einer Suspension, insbesondere einer Faserstoffsuspension (4), bestehend aus einer ersten (5) und einer gegenüberliegenden zweiten (6), perforierten, profilierten und den Innenraum (7) des Filtersektors (1) begrenzenden Filterplatte, die von zwei gemeinsamen, in Umfangsrichtung voneinander beabstandeten und radial verlaufenden Plattenhaltern (8) gehalten werden, die ausgehend von einem, mit der Hohlwelle (2) verbundenen Fußteil (9) die radial verlaufenden Ränder der Filterplatten (5,6) umschließen, wobei die Profilierung der Filterplatten (5,6) wenigstens teilweise in die Plattenhalter (8) hineinreicht, **dadurch gekennzeichnet, dass** die Plattenhalter (8) Hinterschneidungen für das Profil der Filterplatten (5,6) aufweisen.

2. Filtersektor (1) nach Anspruch 1, **dadurch gekennzeichnet, dass** die Plattenhalter (8) in einem radial verlaufenden Dichtungsabschnitt (21) dem Profil der Filterplatten (5,6) folgen.

3. Filtersektor (1) nach Anspruch 1 oder 2, **dadurch gekennzeichnet, dass** die Plattenhalter (8) einteilig ausgebildet sind.

4. Filtersektor (1) nach Anspruch 1 oder 2, **dadurch gekennzeichnet, dass** die Plattenhalter (8) jeweils aus mehreren Elementen zusammengesetzt sind.

5. Filtersektor (1) nach einem der vorhergehenden Ansprüche, **dadurch gekennzeichnet, dass** die Plattenhalter (8) jeweils einen mit dem Innenraum (7) des Filtersektors (1) verbundenen und zum Fußteil (9) führenden Kanal (24) aufweisen.

6. Filtersektor (1) nach einem der Ansprüche 2 bis 5, **dadurch gekennzeichnet, dass** im Dichtungsabschnitt (21) der Abstand zwischen den Plattenhaltern (8) und den Filterplatten (5,6) insgesamt maximal 1 mm, vorzugsweise maximal 0,5 mm beträgt.

7. Filtersektor (1) nach einem der vorhergehenden Ansprüche, **dadurch gekennzeichnet, dass** die Filterplatten (5,6) zwischen den beiden Plattenhaltern (8) nicht miteinander verbunden sind.

8. Filtersektor (1) nach einem der vorhergehenden Ansprüche, **dadurch gekennzeichnet, dass** die Plattenhalter (8) jeweils ein oder mehrere die Filterplatten (5,6) zusammendrückende Spannelemente (23) besitzen.

9. Filtersektor (1) nach einem der vorhergehenden Ansprüche, **dadurch gekennzeichnet, dass** wenigstens eine Filterplatte (5,6) im Dichtungsabschnitt (21) zumindest eines Plattenhalters (8) profiliert ausgebildet ist.

10. Filtersektor (1) nach einem der vorhergehenden Ansprüche, **dadurch gekennzeichnet, dass** dem radial äußeren, zwischen den Plattenhaltern (8) verlaufendem Rand der Filterplatten (5,6) eine Abschlussleiste (22) zugeordnet ist.

11. Filtersektor (1) nach einem der vorhergehenden Ansprüche, **dadurch gekennzeichnet, dass** die Perforierung der Filterplatten (5,6) zumindest bis an die Plattenhalter (8) reicht.

12. Filtersektor (1) nach einem der vorhergehenden Ansprüche, **dadurch gekennzeichnet, dass** wenigstens eine Filterplatte (5,6) ein Wellenprofil aufweist.

13. Filtersektor (1) nach einem der vorhergehenden Ansprüche, **dadurch gekennzeichnet, dass** beide Filterplatten (5,6) ein Wellenprofil aufweisen.

14. Filtersektor (1) nach Anspruch 13, **dadurch gekennzeichnet, dass** die Wellen des Wellenprofils der gegenüberliegender Filterplatten (5,6) zueinander geneigt verlaufen.

15. Filtersektor (1) nach Anspruch 13, **dadurch gekennzeichnet, dass** die Wellen des Wellenprofils der gegenüberliegender Filterplatten (5,6) parallel zueinander verlaufen.

16. Filtersektor (1) nach einem der Ansprüche 12 bis 15, **dadurch gekennzeichnet, dass** die Berge (12,13) des Wellenprofils wenigstens einer Filterplatte (5,6) in zumindest einem Abschnitt eines Plattenhalters (8) parallel zu diesem verlaufen.

17. Filtersektor (1) nach einem der Ansprüche 12 bis 16, **dadurch gekennzeichnet, dass** die Täler vom Innenraum (7) des Filtersektors (1) wegweisende Erhebungen (14) besitzen.

18. Filtersektor (1) nach einem der Ansprüche 12 bis 17, **dadurch gekennzeichnet, dass** beim Wellenprofil die Täler breiter als die Berge (12,13) sind.

19. Filtersektor (1) nach Anspruch 17 oder 18, **dadurch gekennzeichnet, dass** die Erhebungen (14) unterhalb der Bergkämme des Wellenprofils enden.

20. Filtersektor (1) nach einem der Ansprüche 17 bis 19, **dadurch gekennzeichnet, dass** die Erhebungen (14) wellenförmig ausgebildet sind und die Wellenberge der Erhebungen (14) vorzugsweise parallel zu den Bergen (12,13) des Wellenprofils der Filterplatte (5,6) verlaufen.

21. Filtersektor (1) nach Anspruch 20, **dadurch gekennzeichnet, dass** zwischen zwei Bergen (12,13) des Wellenprofils höchstens zwei, vorzugsweise nur eine wellenförmige Erhebung (14) vorhanden ist.

22. Filtersektor (1) nach einem der Ansprüche 10 bis 21, **dadurch gekennzeichnet, dass** die Abschlussleiste (22) zumindest eine Öffnung (15) zum jeweiligen Innenraum (7) des Filtersektors (1) besitzt.

23. Filtersektor (1) nach Anspruch 22, **dadurch gekennzeichnet, dass** die Öffnung (15) von einem grobmaschigen Siebgewebe oder einem perforierten Siebblech gebildet wird.

## Claims

1. Filter sector (1) of a filter disc (3), rotating about a hollow shaft (2), of a disc filter for separating liquids from a suspension, in particular a fibrous material suspension (4), comprising a first (5) and an opposing second (6) filter plate which are perforated and profiled and delimit the interior (7) of the filter sector (1), which filter plates are held by two common plate holders (8) which are spaced apart from each other in the circumferential direction and extend radially, and which, starting from a foot part (9) connected to the hollow shaft (2), enclose the radially extending edges of the filter plates (5, 6), wherein the profiling of the filter plates (5, 6) reaches at least partly into the plate holders (8), **characterized in that** the plate holders (8) have undercuts for the profile of the filter plates (5, 6).

2. Filter sector (1) according to Claim 1, **characterized in that** the plate holders (8) follow the profile of the filter plates (5, 6) in a radially extending sealing section (21).

3. Filter sector (1) according to Claim 1 or 2, **characterized in that** the plate holders (8) are formed in one piece.

4. Filter sector (1) according to Claim 1 or 2, **characterized in that** the plate holders (8) are each assembled from a plurality of elements.

5. Filter sector (1) according to the preceding claims, **characterized in that** the plate holders (8) each have a channel (24) connected to the interior (7) of the filter sector (1) and leading to the foot part (9).

6. Filter sector (1) according to one of Claims 2 to 5, **characterized in that,** in the sealing section (21), the distance between the plate holders (8) and the filter plates (5, 6) is overall at most 1 mm, preferably at most 0.5 mm.

7. Filter sector (1) according to one of the preceding claims, **characterized in that** the filter plates (5, 6) are not connected to one another between the two plate holders (8).

8. Filter sector (1) according to one of the preceding claims, **characterized in that** the plate holders (8) each have one or more clamping elements (23) pressing the filter plates (5, 6) together.

9. Filter sector (1) according to one of the preceding claims, **characterized in that** at least one filter plate (5, 6) is profiled in the sealing section (21) of at least one plate holder (8).

10. Filter sector (1) according to one of the preceding claims, **characterized in that** a terminating strip (22) is assigned to the radially outer edge of the filter plates (5, 6) extending between the plate holders (8).

11. Filter sector (1) according to one of the preceding claims, **characterized in that** the perforation of the filter plates (5, 6) reaches at least as far as the plate holders (8).

12. Filter sector (1) according to one of the preceding claims, **characterized in that** at least one filter plate (5, 6) has a wave profile.

13. Filter sector (1) according to one of the preceding claims, **characterized in that** both filter plates (5, 6) have a wave profile.

14. Filter sector (1) according to Claim 13, **characterized in that** the waves of the wave profile of the opposite filter plates (5, 6) extend at an angle to one another.

15. Filter sector (1) according to Claim 13, **characterized in that** the waves of the wave profile of the opposite filter plates (5, 6) extend parallel to one another.

16. Filter sector (1) according to one of Claims 12 to 15, **characterized in that** the peaks (12, 13) of the wave profile of at least one filter plate (5, 6) in at least one section of a plate holder (8) extend parallel to the latter.

17. Filter sector (1) according to one of Claims 12 to 16, **characterized in that** the valleys have elevations (14) pointing away from the interior (7) of the filter sector (1).

18. Filter sector (1) according to one of Claims 12 to 17, **characterized in that,** in the wave profile, the valleys are wider than the peaks (12, 13).

19. Filter sector (1) according to Claim 17 or 18, **characterized in that** the elevations (14) end below the crests of the wave profile.

20. Filter sector (1) according to one of Claims 17 to 19, **characterized in that** the elevations (14) are wave-shaped and the wave peaks of the elevations (14) preferably extend parallel to the peaks (12, 13) of the wave profile of the filter plate (5, 6).

21. Filter sector (1) according to Claim 20, **characterized in that** there is a maximum of two, preferably only one wave-shaped elevation (14) between two peaks (12, 13) of the wave profile.

22. Filter sector (1) according to one of Claims 10 to 21, **characterized in that** the terminating strip (22) has at least one opening (15) to the respective interior (7) of the filter sector (1).

23. Filter sector (1) according to Claim 22, **characterized in that** the opening (15) is formed by a coarse-mesh screen fabric or a perforated screen plate.

## Revendications

1. Secteur de filtre (1) d'un disque de filtre (3), tournant autour d'un arbre creux (2), d'un filtre à disques pour la séparation de liquides d'une suspension, en particulier d'une suspension de matière fibreuse (4), constitué d'une première (5) et d'une deuxième (6) plaque de filtre opposée, perforée, profilée et délimitant l'espace intérieur (7) du secteur de filtre (1), qui sont maintenues par deux supports de plaques communs (8), espacés l'un de l'autre dans la direction circonférentielle et s'étendant radialement, qui, en partant d'une partie de pied (9) reliée à l'arbre creux (2), entourent les bords s'étendant radialement des plaques de filtre (5, 6), le profilage des plaques de filtre (5, 6) pénétrant au moins partiellement dans les supports de plaques (8), **caractérisé en ce que** les supports de plaques (8) présentent des contre-dépouilles pour le profil des plaques de filtre (5, 6).

2. Secteur de filtre (1) selon la revendication 1, **caractérisé en ce que** les supports de plaques (8) suivent le profil des plaques de filtre (5, 6) dans une section d'étanchéité (21) s'étendant radialement.

3. Secteur de filtre (1) selon la revendication 1 ou 2, **caractérisé en ce que** les supports de plaques (8) sont configurés d'un seul tenant.

4. Secteur de filtre (1) selon la revendication 1 ou 2, **caractérisé en ce que** les supports de plaques (8) sont chacun composés de plusieurs éléments.

5. Secteur de filtre (1) selon l'une quelconque des revendications précédentes, **caractérisé en ce que** les supports de plaques (8) présentent chacun un canal (24) relié à l'espace intérieur (7) du secteur de filtre (1) et menant à la partie de pied (9).

6. Secteur de filtre (1) selon l'une quelconque des revendications 2 à 5, **caractérisé en ce que,** dans la section d'étanchéité (21), la distance entre les supports de plaques (8) et les plaques de filtre (5, 6) est au total d'au maximum 1 mm, de préférence d'au maximum 0,5 mm.

7. Secteur de filtre (1) selon l'une quelconque des revendications précédentes, **caractérisé en ce que** les plaques de filtre (5, 6) ne sont pas reliées entre elles entre les deux supports de plaques (8).

8. Secteur de filtre (1) selon l'une quelconque des revendications précédentes, **caractérisé en ce que** les supports de plaques (8) possèdent chacun un ou plusieurs éléments de serrage (23) pressant ensemble les plaques de filtre (5, 6).

9. Secteur de filtre (1) selon l'une quelconque des revendications précédentes, **caractérisé en ce qu'**au moins une plaque de filtre (5, 6) est configurée sous forme profilée dans la section d'étanchéité (21) d'au moins un support de plaque (8).

10. Secteur de filtre (1) selon l'une quelconque des revendications précédentes, **caractérisé en ce qu'**une baguette de finition (22) est associée au bord radialement extérieur des plaques de filtre (5, 6), qui s'étend entre les supports de plaques (8).

11. Secteur de filtre (1) selon l'une quelconque des revendications précédentes, **caractérisé en ce que** la perforation des plaques de filtre (5, 6) s'étend au moins jusqu'aux supports de plaques (8).

12. Secteur de filtre (1) selon l'une quelconque des revendications précédentes, **caractérisé en ce qu'**au moins une plaque de filtre (5, 6) présente un profil ondulé.

13. Secteur de filtre (1) selon l'une quelconque des revendications précédentes, **caractérisé en ce que** les deux plaques de filtre (5, 6) présentent un profil ondulé.

14. Secteur de filtre (1) selon la revendication 13, **caractérisé en ce que** les ondulations du profil ondulé des plaques de filtre opposées (5, 6) sont inclinées l'une par rapport à l'autre.

15. Secteur de filtre (1) selon la revendication 13, **caractérisé en ce que** les ondulations du profil ondulé des plaques de filtre opposées (5, 6) sont parallèles entre elles.

16. Secteur de filtre (1) selon l'une quelconque des revendications 12 à 15, **caractérisé en ce que** les monts (12, 13) du profil ondulé d'au moins une plaque de filtre (5, 6) dans au moins une section d'un support de plaque (8) sont parallèles à celui-ci.

17. Secteur de filtre (1) selon l'une quelconque des revendications 12 à 16, **caractérisé en ce que** les creux possèdent des surélévations (14) orientées à distance de l'espace intérieur (7) du secteur de filtre (1).

18. Secteur de filtre (1) selon l'une quelconque des revendications 12 à 17, **caractérisé en ce que,** dans le profil ondulé, les creux sont plus larges que les monts (12, 13).

19. Secteur de filtre (1) selon la revendication 17 ou 18, **caractérisé en ce que** les surélévations (14) se terminent au-dessous de la crête du profil ondulé.

20. Secteur de filtre (1) selon l'une quelconque des revendications 17 à 19, **caractérisé en ce que** les surélévations (14) sont configurées sous forme ondulée et les monts d'ondulation des surélévations (14) sont de préférence parallèles aux monts (12, 13) du profil ondulé de la plaque de filtre (5, 6).

21. Secteur de filtre (1) selon la revendication 20, **caractérisé en ce qu'**au plus deux, de préférence une seule surélévation de forme ondulée (14), est présente entre deux monts (12, 13) du profil ondulé.

22. Secteur de filtre (1) selon l'une quelconque des revendications 10 à 21, **caractérisé en ce que** la baguette de finition (22) possède au moins une ouverture (15) vers l'espace intérieur respectif (7) du secteur de filtre (1).

23. Secteur de filtre (1) selon la revendication 22, **caractérisé en ce que** l'ouverture (15) est formée par un tissu de tamisage à grosses mailles ou une tôle de tamisage perforée.
